# FASCICULE DE BREVET EUROPEEN

(11) **EP 0 548 335 B1**
(45) Date de publication et mention de la délivrance du brevet: **17.04.1996**
(21) Numéro de dépôt: 92915601.6
(22) Date de dépôt: 08.07.1992
(51) Int. Cl.: G01N 27/447

(54) **PROCEDE ET DISPOSITIF DE FABRICATION D'UNE PLAQUE DE GEL A MEMBRANE MICROPOREUSE ET CASSETTE DE GEL**
Verfahren und Vorrichtung zur Herstellung einer Gelplatte mit mikroporöser Membran und Gelkassette
PROCESS AND DEVICE FOR THE MANUFACTURE OF A MICROPOROUS MEMBRANE GEL PLATE AND GEL CASSETTE

(30) Priorité: 09.07.1991 FR 9108578
(43) Date de publication de la demande: 30.06.1993
(73) Titulaire: BERTIN & CIE, F-78373 Plaisir Cédex (FR)
(72) Inventeur: BOQUET, Jean, F-78160 Le-Perray-en-Yvelines (FR)
(74) Mandataire: Ramey, Daniel
(86) Numéro de dépôt international: FR9200650
(87) Numéro de publication internationale: WO9301491

(56) Documents cités:
- EP-A- 0 304 195
- EP-A- 0 309 303
- WO-A-87/05230
- US-A- 4 861 411
- US-A- 4 883 597
- US-A- 4 954 236

## Description

L'invention concerne un procédé et un dispositif de fabrication d'une plaque de gel à membrane microporeuse, destinée en particulier à la séparation et au transfert de macromolécules par électrophorèse.

Ces plaques de gel (en général d'agarose ou de polyacrylamide) ont une face recouverte d'une membrane microporeuse adhérente (en général de nitrocellulose ou de "nylon"), et doivent satisfaire à un certain nombre de critères tels que l'homogénéité du gel, la constance de son épaisseur, l'absence de bulles d'air entre le gel et la membrane, la planéité de la membrane et la propreté de la face libre de celle-ci. Ces plaques doivent en outre être utilisées peu de temps après leur fabrication, car le gel vieillit mal (il se dessèche et se fissure assez rapidement).

Les procédés connus de fabrication de ces plaques consistent en général à déposer à la main une membrane sur une couche de gel liquide coulé sur un support, ou à couler le gel liquide sur la membrane posée sur un support, puis à laisser solidifier le gel (voir par exemple EP-A-0 309 303; voir aussi EP-A-0 499 546 publié le 19.08.92). Les résultats obtenus ne sont pas très satisfaisants, au niveau de la planéité et de la propreté de la membrane, car le gel liquide imprègne immédiatement la membrane, provoque l'allongement de celle-ci et la formation de plis ou rides, et peut déborder sur la face libre de la membrane.

Ces procédés connus sont de plus long et fastidieux à exécuter et ne permettent pas une fabrication aisée et rapide des plaques de gel.

La présente invention a notamment pour but d'éviter ces inconvénients des procédés connus.

Elle a pour objet un procédé et un dispositif de fabrication de plaques de gel, qui permettent de satisfaire aux critères précités et qui soient de mise en oeuvre simple et rapide.

Elle a également pour objet un procédé et un dispositif de fabrication de plaques de gel d'une qualité parfaite et identiques entre elles.

Elle propose donc un procédé de fabrication d'une plaque de gel à membrane microporeuse, destinée à la séparation et au transfert de macromolécules par électrophorèse, ce procédé consistant à couler le gel sous forme liquide sur une plaque de fond portant un cadre périphérique, caractérisé en ce qu'il consiste ensuite à déposer progressivement sur le gel liquide une membrane microporeuse sèche, à exercer une traction sur la périphérie de la membrane pour tendre celle-ci de façon sensiblement uniforme, et à laisser solidifier le gel en maintenant la membrane tendue.

La pose progressive de la membrane sur la couche de gel liquide permet de ne pas emprisonner de bulles d'air entre le gel et la membrane. La tension uniforme de la membrane posée sur le gel permet d'assurer sa planéité et de rattraper son allongement éventuel. Le maintien de la membrane en tension permet de conserver cette planéité lors de la solidification du gel et ultérieurement.

Avantageusement, le procédé consiste également à donner à la membrane une forme initiale incurvée convexe par rapport au gel et à la déposer ensuite sur le gel depuis une extrémité de la plaque, en lui redonnant progressivement une forme plane au fur et à mesure qu'elle vient en contact avec le gel.

On est ainsi assuré d'éviter la présence de bulles d'air entre le gel et la membrane.

Dans un mode de réalisation de l'invention, ce procédé consiste à fixer initialement la périphérie de la membrane sur un cadre à côtés extensibles, puis, après avoir déposé la membrane sur le gel liquide, à allonger les côtés du cadre pour tendre la membrane.

De préférence, les côtés extensibles du cadre sont, pendant leur allongement, guidés selon des directions rayonnantes par rapport à un point fixe.

La membrane peut ainsi être tendue de façon sensiblement uniforme dans toutes les directions partant de ce point fixe, qui est de préférence situé sur un axe de symétrie de la membrane.

L'invention propose également un dispositif de fabrication d'une plaque de gel à membrane microporeuse destinée à la séparation et au transfert de macromolécules par électrophorèse, ce dispositif comprenant une plaque de fond portant un cadre périphérique à l'intérieur duquel est coulé le gel sous forme liquide, et étant caractérisé en ce qu'il comprend également des moyens de support de la membrane à sa périphérie et des moyens de tension agissant sur la périphérie de la membrane posée sur le gel.

Dans un mode de réalisation préféré de l'invention, les moyens de support de la membrane comprennent un cadre à côtés extensibles sur lequel la périphérie de la membrane est fixée, par exemple par collage par points.

Ce cadre de support de la membrane peut avoir une configuration en U, à trois côtés extensibles.

Les moyens de tension de la membrane comprennent un mécanisme de poussée agissant sur les côtés du cadre extensible de support de la membrane, et des moyens de guidage des côtés extensibles de ce cadre.

En variante, ce cadre de support peut être remplacé par des rondelles de matière plastique fixées à intervalles réguliers sur la périphérie de la membrane, au moins le long de deux côtés opposés de celle-ci.

La plaque de fond précitée est amovible et porte à une extrémité un peigne de formation de puits à une extrémité de la plaque de gel.

Les plaques de gel fabriquées conformément à l'invention, se présentent comme des cassettes qui peuvent être manipulées sans difficulté, grâce à la présence de cette plaque de fond. Celle-ci est réalisée en une matière plastique n'adhérant pas au gel, et peut être retirée facilement de la cassette lorsqu'on souhaite utiliser celle-ci.

De façon générale, le procédé et le dispositif selon l'invention permettent de simplifier dans une large mesure la fabrication des plaques de gel, d'améliorer leur qualité, et de faciliter leur manipulation.

L'invention a également pour objet une cassette de gel fabriquée notamment au moyen de ce dispositif, caractérisé en ce qu'elle comprend un cadre périphérique comportant des moyens de guidage et de support d'une plaque de fond amovible sur laquelle se trouve le gel, et des moyens de tension de la membrane posée sur le gel.

L'invention sera mieux comprise et d'autres caractéristiques, détails et avantages de celle-ci apparaitront plus clairement à la lecture de la description qui suit, fait à titre d'exemple en référence aux dessins annexés dans lesquels :
- la figure 1 est une vue schématique en plan du cadre d'une cassette selon l'invention;
- la figure 2 est une vue d'extrémité de cette cassette;
- la figure 3 est une vue en plan de la plaque de fond de cette cassette;
- la figure 4 représente schématiquement des moyens d'incurvation de la membrane;
- la figure 5 est une vue schématique en plan, à plus grande échelle, d'un cadre extensible de support de membrane;
- la figure 6 représente schématiquement des moyens de tension;
- la figure 7 est une vue partielle en coupe selon la ligne VII-VII de la figure 6;
- la figure 8 représente schématiquement une partie d'une barrette des moyens de tension;
- la figure 9 représente schématiquement une variante de réalisation du support de la membrane.

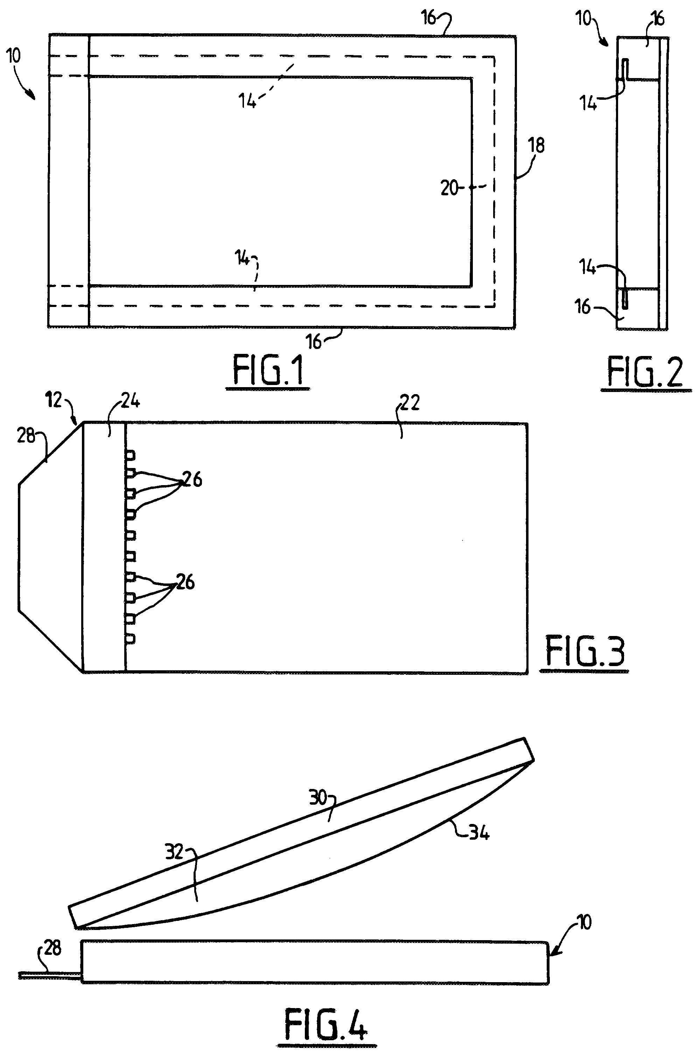

Une cassette selon l'invention comprend essentiellement un cadre 10 représenté aux figures 1 et 2, et une plaque de fond 12, représentée en figure 3. Le cadre 10 est de forme générale rectangulaire et est ouvert à au moins une de ses extrémités, pour recevoir la plaque de fond 12 qui est guidée à la façon d'une tablette coulissante dans des rainures 14 formées en regard l'une de l'autre dans les faces internes des deux grands côtés 16 du cadre 10, dont le côté transversal 18 peut comprendre éventuellement une rainure 20 reliant entre elles les rainures 14 des côtés longitudinaux du cadre.

La plaque de fond 12 est essentiellement constituée d'une plaque plane 22 de forme rectangulaire, réalisée en une matière plastique n'adhérant pas au gel, (par exemple en polymétacrylate de méthyle) et dont une extrémité comporte un peigne 24 à dents parallèles 26 destinées à former des puits dans la couche de gel coulée à l'intérieur du cadre 10. Du côté du peigne 24, la plaque de fond 12 comporte un prolongement 28 permettant de la manipuler aisément pour la mettre en place dans le cadre 10 et pour l'en extraire.

Le dispositif de fabrication des cassettes de gel peut comprendre, comme représenté partiellement en figure 4, une pièce mobile 30 à côtés inférieurs 32 convexes, par exemple en secteur de cylindre, destinés au support d'une membrane 34 destinée à être posée sur une couche de gel liquide coulé dans le cadre 10. Cette pièce mobile 30 est guidée pour rouler sur le cadre 10 d'une extrémité à l'autre de celui-ci, afin de déposer progressivement la membrane sur la couche de gel coulée dans le cadre 10, au fur et à mesure que l'on roule les côtés incurvés convexes 32 sur les côtés du cadre 10.

Tout moyen approprié peut être utilisé pour maintenir temporairement la membrane 34 sur la pièce 30.

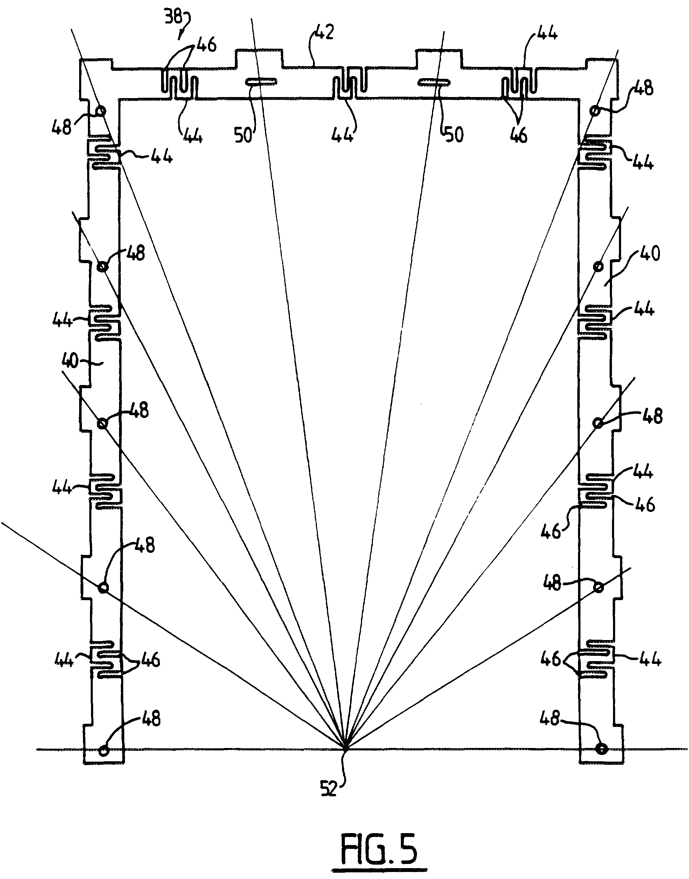

Par ailleurs, la membrane 34 est fixée à sa périphérie, par exemple par collage par points ou par soudure, sur un cadre 38 extensible représenté en figure 5. Ce cadre 38 en forme de U comprend deux branches plates parallèles et extensibles 40 reliées entre elles à une extrémité par une branche plate extensible transversale 42.

Ce cadre 38 est par exemple moulé par injection en une matière plastique relativement rigide, chaque branche 40, 42 comportant des zones extensibles 44 régulièrement réparties que l'on obtient en formant des fentes transversales 46 dans les branches du cadre, ces fentes étant disposées tête-bêche comme représenté au dessin.

Les parties non extensibles des branches 40 et 42 du cadre, c'est-à-dire les parties dans lesquelles ne sont pas formées les zones 44, comprennent respectivement des trous 48 circulaires et des lumières allongées transversales 50, destinés à recevoir des pions faisant partie d'un système de tension de la membrane. On comprend que lorsque les pions de ce système sont déplacés en translation vers l'extérieur chacun dans une direction rayonnante à partir d'un point fixe 52 qui se trouve au milieu d'une ligne joignant les extrémités libres des branches parallèles 40, à l'opposé de la branche transversale 42, les branches 40, 42 du cadre 38 vont s'allonger par déformation longitudinale des zones extensibles 44 et la membrane fixée à sa périphérie sur le cadre 38 va être tendue dans toutes les directions à partir du point 52.

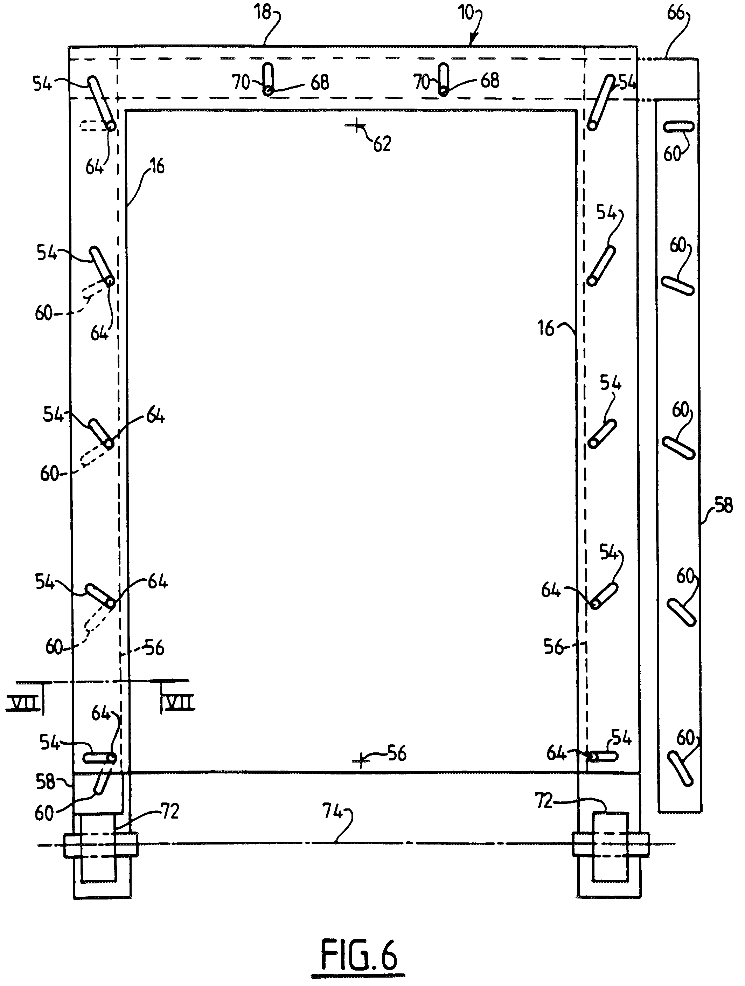

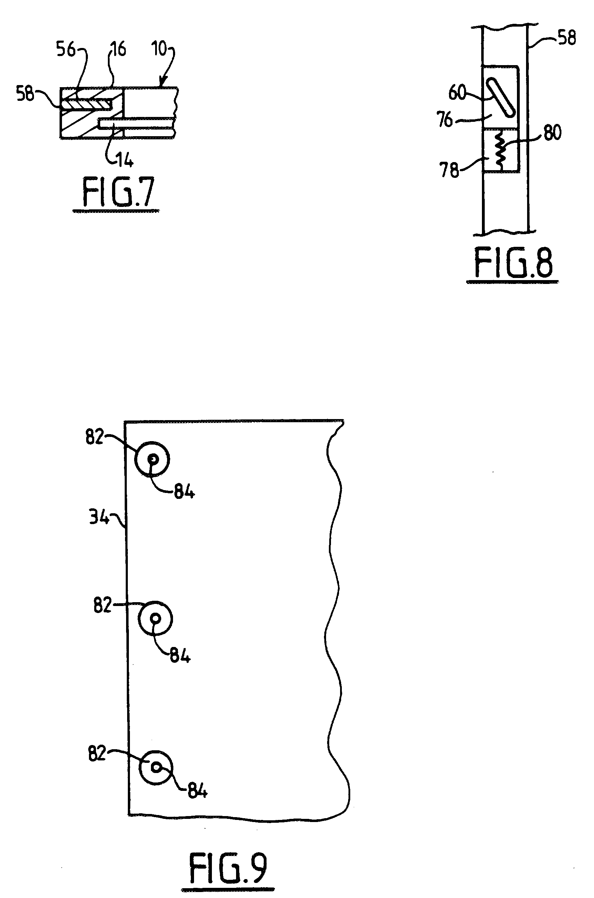

Les figures 6 et 7 illustrent un exemple de réalisation d'un tel système de tension.

Dans cet exemple de réalisation, les faces supérieures des côtés longitudinaux 16 du cadre 10 de la cassette comprennent des lumières allongées 54, qui sont orientées de façon rayonnante par rapport à un point fixe 56, situé au milieu d'une ligne joignant les extrémités des côtés 16 à l'opposé du côté transversal 18, et correspondant au point 52 du cadre extensible 38. Ces lumières 54 débouchent dans des rainures formées dans les côtés longitudinaux 16 du cadre 10, au-dessus des rainures 14 de réception et de guidage de la plaque de fond 10. Ces rainures 56 reçoivent chacune une barrette coulissante 58 qui comporte elle-même des lumières 60 orientées à l'inverse des lumières 54. En figure 6, la barrette 58 de droite a été représentée à l'extérieur du cadre 10 pour plus de clarté, mais elle doit bien entendu se trouver dans la rainure 56 du côté 16 correspondant du cadre. Lorsque les barrettes 58 sont en place dans les rainures 56 des côtés longitudinaux du cadre 10, leurs lumières 60 sont orientées de façon rayonnante par rapport à un point 62 qui est le symétrique du point 56 et qui se trouve situé au milieu de la ligne joignant les lumières supérieures transversales 60 des barrettes 58. Des pions 64 sont engagés dans les intersections des lumières 54 du cadre 10 et des lumières 60 des barrettes 58.

Les barrettes 58 sont réunies entre elles par une barrette transversale 66 à leur extrémité supérieure. Cette barrette transversale porte deux pions 68 engagés dans des lumières longitudinales 70 du côté 18 du cadre 10, et destinés à s'engager dans les lumières 50 du côté transversal 42 du cadre extensible 38.

Lorsque les barrettes 58 sont déplacées par coulissement dans les rainures 56 vers la haut à partir de leur position représentée en figure 6, les pions 64 sont déplacés dans les lumières 54 du cadre 10 en s'écartant vers l'extérieur, de façon rayonnante par rapport au point 56.

En conséquence, lorsque le cadre extensible 38 sur lequel est fixée la membrane, est posé sur la face supérieure du cadre 10 de telle sorte que les trous 48 de ce cadre extensible s'engagent sur les pions 64, et lorsqu'on déplace ensuite les barrettes 58 par coulissement dans les rainures 56 comme indiqué plus haut, les branches 40, 42 du cadre extensible 38 vont s'allonger en suivant le déplacement des pions 64 dans les lumières 54 du cadre 10 et la membrane fixée sur le cadre va se tendre de façon sensiblement uniforme et rayonnante à partir du point 52, qui est alors superposé au point 56 du cadre 10. L'allongement des côtés du cadre 38 est par exemple de l'ordre du mm en transversal et de 2 à 3 mm en longitudinal, pour une membrane de 15 cm x 20 cm environ.

Le déplacement des barrettes 58 est assuré par exemple par des cames 72 montées à rotation autour d'un axe transversal 74 et agissant sur l'extrémité libre des barrettes 58. Une poignée, non représentée, permet de faire tourner les cames 72 sur un quart de tour, pour un déplacement des barrettes 58 de l'ordre du centimètre.

Pour éviter une trop forte tension de la membrane, on utilise le système de la figure 8: chaque lumière 60 de chaque barrette 58 est formée dans un patin 76 monté coulissant dans un logement longitudinal 78 de la barrette, et un ressort ou élément élastique de compression 80 est disposé entre l'extrémité inférieure du logement 78 et le patin 76. Ainsi, la translation des barrettes 58 provoque d'abord la tension de la membrane, puis la compression des ressorts 80, ce qui limite automatiquement la tension de la membrane à une valeur déterminée.

Le maintien des cames 72 en position assure le maintien de la membrane en tension. Il est donc avantageux que ces cames et leur moyen d'entraînement soient portés par le cadre 10 de la cassette. La tension de la membrane peut alors être maintenue aussi longtemps qu'on le souhaite.

Dans la variante de réalisation de la figure 9, le cadre extensible 38 est remplacé par des rondelles 82 de matière appropriée fixées à intervalles réguliers sur la périphérie de la membrane 34, au moins le long des deux grands côtés de celle-ci, et comprenant des orifices centraux 84 correspondant aux trous 48 du cadre 38 pour recevoir les pions 64 du système de tension.

L'utilisation du dispositif selon l'invention est très simple :
un gel liquide, par exemple d'agarose à une température de l'ordre de 60 à 65°C, est coulé dans la cassette pour former une couche de gel sur la plaque de fond 12, avec une épaisseur de l'ordre de 5 à 7mm de façon à venir affleurer la face supérieure du cadre 10. La membrane 34, sur la périphérie de laquelle on a fixé soit le cadre extensible 38, soit les rondelles 82, est déposée progressivement sur la couche de gel, depuis une extrémité de la cassette, de telle sorte que les trous 48 du cadre extensible 38 ou les trous 84 des rondelles 82 s'engagent sur les pions 64 du mécanisme de tension. Lorsque la membrane a été ainsi déposée complètement sur la cassette et recouvre la couche de gel liquide, on fait tourner sur un quart de tour la poignée de commande des cames 72 pour déplacer les barrettes 58 dans les rainures du cadre 10, ce qui met la membrane 34 sous faible tension, en rattrapant son allongement éventuel provoqué par l'imprégnation par le gel et/ou par la température du gel, et en lui donnant une planéité parfaite.

On laisse ensuite solidifier le gel par refroidissement.

Lorsque le gel est solidifié, il suffit de retirer la plaque de fond 12, qui n'adhère pas au gel, pour pouvoir utiliser la cassette.

## Revendications

1. Procédé de fabrication d'une plaque de gel à membrane microporeuse pour la séparation et le transfert de macromolécules par électrophorèse, consistant à couler le gel sous forme liquide sur une plaque de fond (12) portant un cadre périphérique (10), caractérisé en ce qu'il consiste ensuite :
- à déposer progressivement sur le gel liquide une membrane microporeuse sèche (34),
- à exercer une traction sur la périphérie de la membrane (34) pour tendre celle-ci de façon sensiblement uniforme,
- et à laisser solidifier le gel en maintenant la membrane tendue.

2. Procédé selon la revendication 1, caractérisé en ce qu'il consiste à donner à la membrane (34) une forme initiale incurvée convexe par rapport au gel et à la déposer sur le gel depuis une extrémité de la plaque en lui redonnant progressivement une forme plane au fur et à mesure qu'elle vient en contact avec le gel.

3. Procédé selon la revendication 1 ou 2, caractérisé en ce qu'il consiste à fixer initialement la périphérie de la membrane (34) sur un cadre (38) à côtés extensibles, puis, après avoir déposé la membrane sur le gel liquide, à allonger les côtés dudit cadre pour tendre la membrane.

4. Procédé selon la revendication 3, caractérisé en ce qu'il consiste à guider, pendant leur allongement, les côtés extensibles du cadre (38) selon des directions rayonnantes par rapport à un point fixe (52).

5. Procédé selon la revendication 1 ou 2, caractérisé en ce qu'il consiste à fixer des rondelles (82) sur la périphérie de la membrane (34), au moins le long de deux côtés opposés de celle-ci, et à exercer ensuite une traction sur ces rondelles dans des directions rayonnantes à partir d'un point fixe pour tendre la membrane.

6. Procédé selon l'une des revendications précédentes, caractérisé en ce qu'il consiste à retirer la plaque de fond (12) précitée pour utilisation de la plaque.

7. Dispositif de fabrication d'une plaque de gel à membrane microporeuse, destinée à la séparation et au transfert de macromolécules par électrophorèse, le dispositif comprenant une plaque de fond (12) portant un cadre périphérique (10) à l'intérieur duquel est coulé le gel sous forme liquide, le dispositif étant caractérisé en ce qu'il comprend :
- des moyens (38, 82) de support de la membrane (34) à sa périphérie,
- des moyens de tension agissant sur lesdits moyens de support pour tendre la membrane posée sur le gel.

8. Dispositif selon la revendication 7, caractérisé en ce que les moyens de support de la membrane comprennent un cadre (38) à côtés extensibles sur lequel la périphérie de la membrane est fixée, par exemple par soudure ou collage par points.

9. Dispositif selon la revendication 8, caractérisé en ce que le cadre (38) de support de la membrane a une configuration en U à trois côtés extensibles.

10. Dispositif selon la revendication 7, caractérisé en ce que les moyens de support de la membrane comprennent des rondelles (82) fixées à intervalles réguliers sur la périphérie de la membrane, au moins le long de deux côtés opposés de celle-ci.

11. Dispositif selon une des revendications 8 à 10 ou 8, caractérisé en ce que les moyens de tension de la membrane comprennent un mécanisme de traction (58, 64) agissant sur les moyens (38, 82) de support de la membrane, et des moyens (54) de guidage de ces moyens de support.

12. Dispositif selon la revendication 11, caractérisé en ce que le mécanisme précité comprend des barrettes (58) guidées en translation dans des rainures(56) des côtés longitudinaux (16) du cadre (10) de la plaque de fond, des pions (64) coopérant avec les moyens de support de la membrane et logés dans des lumières rayonnantes (54, 60) formées respectivement dans les côtés (16) précités du cadre (10) et dans les barrettes (58), et des moyens de déplacement des barrettes (58) en translation dans les rainures (56) des côtés du cadre (10).

13. Dispositif selon la revendication 12, caractérisé en ce qu'il comprend des moyens (76, 80) pour limiter automatiquement la tension de la membrane à une valeur prédéterminée.

14. Dispositif selon l'une des revendications 7 à 13, caractérisé en ce que la plaque de fond (12) est amovible et porte à une extrémité un peigne (24, 26) de formation de puits à une extrémité du gel coulé.

15. Cassette de gel à membrane microporeuse fabriquée par exemple au moyen du dispositif selon l'une des revendications 7 à 14, caractérisée en ce qu'elle comprend un cadre périphérique (10) comportant des moyens (14) de guidage et de support d'une plaque de fond (12) amovible sur laquelle se trouve le gel, et des moyens (38, 82, 58, 64) de tension de la membrane (34) posée sur le gel.

## Patentansprüche

1. Verfahren zur Herstellung einer Platte aus Gel mit mikroporöser Membrane für die Trennung und die Übertragung von Makromolekülen durch Elektrophorese, beruhend auf dem Gießen des Gels in flüssiger Form auf eine Grundplatte (12), die einen Umfangsrahmen (10) trägt, dadurch **gekennzeichnet**, daß es ferner darauf beruht:
- daß man progressiv bzw. fortschreitend auf das flüssige Gel eine trockene mikroporöse Membrane (34) legt,
- daß man einen Zug auf den Umfang der Membrane (34) ausübt, um dieselbe in im wesentlichen gleichförmiger Art und Weise zu spannen,
- und daß man das Gel sich verfestigen läßt, indem man die Membrane gespannt hält.

2. Verfahren gemäß Anspruch 1, dadurch **gekennzeichnet**, daß es darauf beruht, daß man der Membrane (34) eine anfängliche mit Bezug auf das Gel konvex gekrümmte Form gibt und sie von einem Ende der Platte an auf das Gel legt, indem man ihr progressiv bzw. fortschreitend wieder eine ebene Form in dem Maße, in welchem sie in Kontakt mit dem Gel kommt, gibt.

3. Verfahren gemäß Anspruch 1 oder 2, dadurch **gekennzeichnet**, daß es darauf beruht, daß man anfänglich den Umfang der Membrane (34) auf einem Rahmen (38) mit auszieh- bzw. streckbaren Seiten befestigt, dann, nachdem man die Membrane auf das flüssige Gel gelegt hat, die Seiten des genannten Rahmens verlängert bzw. dehnt, um die Membrane zu spannen.

4. Verfahren gemäß Anspruch 3, dadurch **gekennzeichnet**, daß es darauf beruht, daß man die auszieh- bzw. streckbaren Seiten des Rahmens (38) während ihrer Verlängerung bzw. Dehnung gemäß Richtungen führt, die mit Bezug auf einen festen Punkt (52) ausstrahlen.

5. Verfahren gemäß dem Anspruch 1 oder 2, dadurch **gekennzeichnet**, daß es darauf beruht, daß man Unterlagscheiben bzw. kleine Scheiben (82) auf dem Umfang der Membrane (34) wenigstens längs zweier entgegengesetzter Seiten derselben befestigt und danach einen Zug auf diese Unterlagscheiben bzw. kleinen Scheiben in Richtungen ausübt, die ausgehend von einem festen Punkt ausstrahlen, um die Membrane zu spannen.

6. Verfahren gemäß einem der vorhergehenden Ansprüche, dadurch **gekennzeichnet**, daß es darauf beruht, daß man die vorgenannte Grundplatte (12) für die Benutzung der Platte wegnimmt.

7. Einrichtung zur Herstellung einer Platte aus Gel mit mikroporöser Membrane, die zur Trennung und zur Übertragung von Makromolekülen durch Elektrophorese bestimmt ist, wobei die Einrichtung eine Grundplatte (12) umfaßt, die einen Umfangsrahmen (10) trägt, in dessen Inneres das Gel in flüssiger Form gegossen wird, wobei die Einrichtung dadurch **gekennzeichnet** ist, daß sie folgendes umfaßt:
- Mittel (38, 82) zum Halt der Membrane (34) an ihrem Umfang,
- Mittel zum Spannen, die auf die genannten Mittel zum Halt für das Spannen der auf das Gel gelegten Membrane wirken.

8. Einrichtung gemäß dem Anspruch 7, dadurch **gekennzeichnet**, daß die Mittel zum Halt der Membrane einen Rahmen (38) mit auszieh- bzw. streckbaren Seiten umfassen, auf dem der Umfang der Membrane befestigt wird, zum Beispiel durch Punktschweißung oder -klebung.

9. Einrichtung gemäß dem Anspruch 8, dadurch **gekennzeichnet**, daß der Rahmen (38) zum Halt der Membrane eine U-Konfiguration mit drei auszieh- bzw. streckbaren Seiten hat.

10. Einrichtung gemäß dem Anspruch 7, dadurch **gekennzeichnet**, daß die Mittel zum Halt der Membrane Unterlagscheiben bzw. kleine Scheiben (82) umfassen, die in regelmäßigen Intervallen auf dem Umfang der Membrane wenigstens längs zweier entgegengesetzter Seiten derselben befestigt werden.

11. Einrichtung gemäß einem der Ansprüche 8 bis 10 oder 8, dadurch **gekennzeichnet**, daß die Mittel zum Spannen der Membrane einen Zugmechanismus (58, 64), welcher auf die Mittel (38, 82) zum Halt der Membrane wirkt, und Mittel (54) zur Führung dieser Mittel zum Halt umfassen.

12. Einrichtung gemäß dem Anspruch 11, dadurch **gekennzeichnet**, daß der vorgenannte Mechanismus folgendes umfaßt: Stäbchen (58), die zur Translation in Nuten (56) der Längsseiten (16) des Rahmens (10) der Grundplatte geführt sind, Pione bzw. Metallstücke (64), die mit den Mitteln zum Halt der Membrane zusammenwirken und in ausstrahlenden Öffnungen (54, 60) untergebracht sind, die jeweils in den vorgenannten Seiten (16) des Rahmens (10) und in den Stäbchen (58) ausgebildet sind, und Mittel zum Verlagern der Stäbchen (58) in Translation in den Nuten (56) der Seiten des Rahmens (10).

13. Einrichtung gemäß dem Anspruch 12, dadurch **gekennzeichnet**, daß sie Mittel (76, 80) zum auto matischen Begrenzen der Spannung der Membrane auf einen vorbestimmten Wert umfaßt.

14. Einrichtung gemäß einem der Ansprüche 7 bis 13, dadurch **gekennzeichnet**, daß die Grundplatte (12) abnehm- bzw. auswechselbar ist und an einem Ende einen Kamm (24, 26) für die Ausbildung von Schächten an einem Ende des gegossenen Gels trägt.

15. Kassette mit Gel mit mikroporöser Membrane, zum Beispiel hergestellt mittels der Einrichtung gemäß einem der Ansprüche 7 bis 14, dadurch **gekennzeichnet**, daß sie einen Umfangsrahmen (10) umfaßt, der Mittel (14) für die Führung und zum Halt einer abnehm- bzw. auswechselbaren Grundplatte (12), auf welcher sich das Gel befindet, umfaßt, und Mittel (38, 82, 58, 64) für das Spannen der Membrane (34), die auf das Gel gelegt ist.

## Claims

1. A method of fabricating a microporous-membrane gel plate for separating and transferring macromolecules by electrophoresis, the method consisting in casting the gel in liquid form onto a bottom plate (12) carrying a peripheral frame (10), and being characterized in that it then consists in:
placing a dry microporous membrane (34) progressively on the liquid gel;
exerting traction on the periphery of the membrane (34) to tension it in substantially uniform manner; and
allowing the gel to solidify while keeping the membrane under tension.

2. A method according to claim 1, characterized in that it consists in giving the membrane (34) an initial shape that has a convex curve towards the gel, in placing the membrane on the gel starting from one end of the plate, and in progressively imparting a plane shape to the membrane as it comes into contact with the gel.

3. A method according to claim 1 or 2, characterized in that it consists initially in fixing the periphery of the membrane (34) on a frame (38) having extensible sides, and then after the membrane has been placed on the liquid gel, in lengthening the sides of said frame to tension the membrane.

4. A method according to claim 3, characterized in that it consists in guiding the extensible sides of the frame (38) while they are being lengthened along directions that radiate relative to a fixed point (52).

5. A method according to claim 1 or 2, characterized in that it consists in fixing washers on the periphery of the membrane (34), at least along two opposite sides thereof, and then in exerting traction on said washers in directions that radiate from a fixed point in order to tension the membrane.

6. A method according to any preceding claim, characterized in that in order to use the plate of gel, the above-mentioned bottom plate (12) is removed.

7. Apparatus for fabricating a microporous-membrane gel plate for separating and transferring macromolecules by electrophoresis, the apparatus comprising a bottom plate (12) carrying a peripheral frame (10) into which the gel is cast in liquid form, the apparatus being characterized in that it comprises:
membrane support means (38, 82) at the periphery of the membrane (34); and
tensioning means acting on said support means to tension the membrane placed on the gel.

8. Apparatus according to claim 7, characterized in that the membrane support means comprise a frame (38) having extensible sides to which the periphery of the membrane is fixed, e.g. by spot gluing or welding.

9. Apparatus according to claim 8, characterized in that the membrane support frame (38) has a U-shaped configuration with three extensible sides.

10. Apparatus according to claim 7, characterized in that the membrane support means comprise washers (82) fixed at regular intervals on the periphery of the membrane, at least along two opposite sides thereof.

11. Apparatus according to any one of claims 8 to 10,
characterized in that the membrane tensioning means comprise a traction mechanism (58, 64) acting on the membrane support means (38, 82), and guide means (54) for said support means.

12. Apparatus according to claim 11, characterized in that the above-mentioned mechanism comprises strips (58) guided in translation along grooves (56) in the longitudinal sides (16) of the bottom plate frame (10), pegs (64) co-operating with the membrane support means and being received in radiating slots (54, 60) formed respectively in the above-mentioned sides (16) of the frame (10) and in the strips (58), and means for displacing the strips in translation along the grooves (56) in the sides of the frame (10).

13. Apparatus according to claim 12, characterized in that it includes means (76, 80) for automatically limiting the membrane tension to a predetermined value.

14. Apparatus according to any one of claims 7 to 13, characterized in that the bottom plate (12) is removable and carries a comb (24, 26) at one end for forming wells in one end of the cast gel.

15. A gel cassette having a microporous membrane, e.g. fabricated by means of the apparatus according to any one of claims 7 to 14, characterized in that it comprises a peripheral frame (10) including support and guide means (14) for a removable bottom plate (12) on which the gel is to be found, and means (38, 82, 58, 64) for tensioning the membrane (34) placed on the gel.
